(19)

Europäisches
Patentamt
European
Patent Office
Office européen
des brevets

(11) **EP 4 697 362 A1**

(12) **EUROPEAN PATENT APPLICATION**
published in accordance with Art. 153(4) EPC

(43) Date of publication:
**18.02.2026 Bulletin 2026/08**

(21) Application number: **24788165.9**

(22) Date of filing: **11.04.2024**

(51) International Patent Classification (IPC):
**G21C 17/108** (2006.01)

(52) Cooperative Patent Classification (CPC):
**Y02E 30/30**

(86) International application number:
**PCT/CN2024/087293**

(87) International publication number:
**WO 2024/213063 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.04.2023 CN 202310422565**

(71) Applicants:
• **China Nuclear Power Technology Research
Institute Co., Ltd.
Shenzhen, Guangdong 518031 (CN)**
• **China General Nuclear Power Corporation
Shenzhen, Guangdong 518028 (CN)**

• **CGN Power Co., Ltd.
Shenzen, Guangdong 518028 (CN)**

(72) Inventors:
• **HE, Mingtao
Shenzhen, Guangdong 518031 (CN)**
• **WANG, Xinxin
Shenzhen, Guangdong 518031 (CN)**
• **YU, Chao
Shenzhen, Guangdong 518031 (CN)**
• **ZHAO, Changyou
Shenzhen, Guangdong 518031 (CN)**

(74) Representative: **Michalski Hüttermann & Partner
Patentanwälte mbB
Kaistraße 16A
40221 Düsseldorf (DE)**

(54) **METHOD AND APPARATUS FOR DETERMINING TRANSIENT NEUTRON FLUENCE RATE OF
CORE, AND DEVICE AND STORAGE MEDIUM**

(57)    A method and apparatus for determining a transient neutron flux of a reactor core, and a device and a storage medium are provided. The method includes: when a reactor core is in an unsteady state, determining an amplitude value of the reactor core at the previous moment according to a neutron flux of the core at the previous moment (S101); determining a shape value and amplitude value of the reactor core at the current moment according to the amplitude value of the reactor core at the previous moment (S102); and determining a target neutron flux of the reactor core at the current moment according to the shape value and amplitude value of the reactor core at the current moment (S103).

an amplitude value of a reactor core at a previous moment is determined according to a neutron flux of the reactor core at the previous moment when the reactor core is under an unsteady state — S101

a shape value of the reactor core and the amplitude value of the reactor core at the current moment are determined according to the neutron flux of the reactor core and the amplitude value of the reactor core at the previous moment — S102

a target neutron flux of the reactor core at the current moment is determined according to the shape value of the reactor core and the amplitude value of the reactor core at the current moment — S103

FIG. 1

EP 4 697 362 A1

**Description**

**RELATED APPLICATIONS**

This application claims priority to the Chinese Patent Application No. 202310422565.8, filed on April 13, 2023, entitled "METHOD AND APPARATUS FOR DETERMINING TRANSIENT NEUTRON FLUX OF CORE, AND DEVICE AND STORAGE MEDIUM", which is incorporated herein by reference in its entirety.

**TECHNICAL FIELD**

The present application relates to the technical field of operation and safety of reactor cores, and in particular to a method and apparatus for determining the transient neutron flux of a reactor core.

**BACKGROUND**

With the development of industrial technologies, nuclear reactors play an increasingly important role in industrial applications. A reactor core is the heart of a nuclear reactor. Safety is a key concern in the design and operation of the reactor core. Therefore, close attention must be paid to the neutron flux of the reactor core during transient processes.
In conventional technologies, methods for obtaining the neutron flux of the reactor core generally involve solving the time-dependent neutron transport equation or the time-dependent neutron diffusion equation. The main challenge lies in the handling of time variables, with specific methods including the factor splitting method and the like.
However, under a certain unsteady state, such as a transient process caused by a change in the position of a control rod, the absorption capacity of the control rod for neutrons with different energies varies, leading to a change in the spatial distribution of the neutrons with different energies. Consequently, the neutron flux of the reactor core obtained by the conventional factor splitting method is relatively low in accuracy.

**SUMMARY**

According to various embodiments of the present application, a method and an apparatus for determining a transient neutron flux of a reactor core, and a device and storage medium are provided.
In a first aspect, a method for determining a transient neutron flux of a reactor core is provided in the present application. The method includes:

determining an amplitude value of the reactor core at a previous moment according to a neutron flux of the reactor core at the previous moment, when the core is under an unsteady state;
determining a shape value of the reactor core and the amplitude value of the reactor core at the current moment according to the neutron flux of the reactor core and the amplitude value of the reactor core at the previous moment; and
determining a target neutron flux of the reactor core at the current moment according to the shape value of the reactor core and the amplitude value of the reactor core at the current moment.

In one of the embodiments, the determining the amplitude value of the reactor core at the previous moment according to the neutron flux of the reactor core at the previous moment includes:

extracting an amplitude function related to a core energy is from a neutron flux equation; and

determining the amplitude value of the reactor core at the previous moment based on the amplitude function according to the neutron flux of the reactor core at the previous moment.

In one of the embodiments, the method further includes:
serving the neutron flux of the reactor core under a stable state as the neutron flux of the reactor core at an initial moment when the previous moment is the initial moment.
In one of the embodiments, the determining the shape value of the reactor core and the amplitude value of the reactor core at the current moment according to the neutron flux of the reactor core and the amplitude value of the reactor core at the previous moment includes:

determining a current quantified time according to the previous moment and a unit time interval;
discretizing a neutron flux equation by using the current quantified time to obtain an estimated neutron flux of the reactor core at the current moment; and

determining the shape value of the reactor core and the amplitude value of the reactor core at the current moment according to the estimated neutron flux of the reactor core at the current moment and the amplitude value of the reactor core at the previous moment.

In one of the embodiments, the determining the shape value of the reactor core and the amplitude value of the reactor core at the current moment according to the estimated neutron flux of the reactor core at the current moment and the amplitude value of the reactor core at the previous moment includes:

determining the amplitude value of the reactor core at the current moment based on the neutron flux equation according to the estimated neutron flux of the reactor core at the current moment; and determining the shape value of the reactor core at the current moment according to the amplitude value of the reactor core at the previous moment and the amplitude value of the reactor core at the current moment.

In one of the embodiments, the determining the shape value of the reactor core at the current moment according to the amplitude value of the reactor core at the previous moment and the amplitude value of the reactor core at the current moment includes:

determining neutron dynamics parameters at the current moment according to the amplitude value of the reactor core at the previous moment and the amplitude value of the reactor core at the current moment; and determining the shape value of the reactor core at the current moment according to the amplitude value of the reactor core at the previous moment, the amplitude value of the reactor core at the current moment, and the neutron dynamics parameters at the current moment.

In a second aspect, an apparatus for determining the transient neutron flux of the reactor core is provided in the present application. The apparatus includes:

a first determining module, configured to determine an amplitude value of the reactor core at a previous moment according to a neutron flux of the reactor core at the previous moment when the core is under an unsteady state; a second determining module, configured to determine a shape value of the reactor core and the amplitude value of the reactor core at the current moment according to the neutron flux of the reactor core and the amplitude value of the reactor core at the previous moment; and a third determining module, configured to determine a target neutron flux of the reactor core at the current moment according to the shape value of the reactor core and the amplitude value of the reactor core at the current moment.

In one of the embodiments, the first determining module includes:

a first extracting unit, configured to extract an amplitude function related to a core energy from a neutron flux equation; and an amplitude value determining unit, configured to determine the amplitude value of the reactor core at the previous moment based on the amplitude function according to the neutron flux of the reactor core at the previous moment.

In one of the embodiments, the apparatus further includes:
an initial determining module, configured to take the neutron flux of the reactor core under a stable state as the neutron flux of the reactor core at the initial moment when the previous moment is an initial moment.
In one of the embodiments, the second determining module includes:

a time determining unit, configured to determine a current quantified time according to the previous moment and a unit time interval; an equation discretizing unit, configured to discretize a neutron flux equation by using the current quantified time to obtain the estimated neutron flux of the reactor core at the current moment; and a value determining unit, configured to determine the shape value and amplitude value of the reactor core at the current moment according to an estimated neutron flux of the reactor core at the current moment and the amplitude value of the reactor core at the previous moment.

In one of the embodiments, the value determining unit includes:

an amplitude value determining subunit, configured to determine the amplitude value of the reactor core at the current moment based on the neutron flux equation according to the estimated neutron flux of the reactor core at the current moment; and

a shape value determining subunit, configured to determine the shape value of the reactor core at the current moment according to the amplitude value of the reactor core at the previous moment and the amplitude value of the reactor core at the current moment.

In one of the embodiments, the shape value determining subunit is further configured to:

determine neutron dynamics parameters at the current moment according to the amplitude value of the reactor core at the previous moment and the amplitude value of the reactor core at the current moment; and

determine the shape value of the reactor core at the current moment according to the amplitude value of the reactor core at the previous moment, the amplitude value of the reactor core at the current moment, and the neutron dynamics parameters at the current moment.

In a third aspect, a computer device is provided in the present application. The computer device includes a memory and a processor, where the memory stores a computer program, and the processor, when executing the computer program, implements the following steps:

determining an amplitude value of the reactor core at a previous moment according to a neutron flux of the reactor core at the previous moment, when the core is under an unsteady state;

determining a shape value of the reactor core and the amplitude value of the reactor core at the current moment according to the neutron flux of the reactor core and the amplitude value of the reactor core at the previous moment; and

determining a target neutron flux of the reactor core at the current moment according to the shape value of the reactor core and the amplitude value of the reactor core at the current moment.

In a fourth aspect, a computer-readable storage medium is provided in the present application, where a computer program is stored thereon, and the computer program, when executed by a processor, implements the following steps:

determining an amplitude value of the reactor core at a previous moment according to a neutron flux of the reactor core at the previous moment, when the core is under an unsteady state;

determining a shape value of the reactor core and the amplitude value of the reactor core at the current moment according to the neutron flux of the reactor core and the amplitude value of the reactor core at the previous moment; and

determining a target neutron flux of the reactor core at the current moment according to the shape value of the reactor core and the amplitude value of the reactor core at the current moment.

In a fifth aspect, a computer program product is provided in the present application. The computer program product includes a computer program, and the computer program, when executed by a processor, implements the following steps:

determining an amplitude value of the reactor core at a previous moment according to a neutron flux of the reactor core at the previous moment, when the core is under an unsteady state;

determining a shape value of the reactor core and the amplitude value of the reactor core at the current moment according to the neutron flux of the reactor core and the amplitude value of the reactor core at the previous moment; and

determining a target neutron flux of the reactor core at the current moment according to the shape value of the reactor core and the amplitude value of the reactor core at the current moment.

The details of one or more embodiments of the present application are set forth in the accompanying drawings and the description below. Other features, objectives, and advantages of the present application shall become apparent from the description, the accompanying drawings, and the claims.

## BRIEF DESCRIPTION OF THE DRAWINGS

To more clearly illustrate the technical solutions in the embodiments of the present application or the conventional technologies, the following briefly introduces the accompanying drawings required for describing the embodiments or the conventional technologies. Obviously, the accompanying drawings in the following description only involve some embodiments of the present application. For those of ordinary skill in the art, other accompanying drawings can be obtained according to the disclosed accompanying drawings without inventive effort.

FIG. 1 is a schematic flowchart of a method for determining a transient neutron flux of a reactor core in an embodiment.

FIG. 2 is a schematic flowchart of determining a shape value and an amplitude value of the reactor core at the current moment in an embodiment.

FIG. 3 is a schematic flowchart of determining the shape value and amplitude value of a reactor core at the current moment in another embodiment.

FIG. 4 is a schematic flowchart of a method for determining a transient neutron flux of a reactor core in another embodiment.

FIG. 5 is a structural block diagram of an apparatus for determining a transient neutron flux of a reactor core in an embodiment.

FIG. 6 is a structural block diagram of an apparatus for determining a transient neutron flux of a reactor core in another embodiment.

FIG. 7 is a structural block diagram of an apparatus for determining a transient neutron flux of a reactor core in yet another embodiment.

FIG. 8 is an internal structural diagram of a computer device in an embodiment.

## DETAILED DESCRIPTION OF EMBODIMENTS

The following clearly and completely describes the technical solutions in the embodiments of the present application with reference to the accompanying drawings in the embodiments of the present application. Apparently, the described embodiments are only some of the embodiments of the present application, rather than all the embodiments. Based on the embodiments in the present application, all other embodiments obtained by those of ordinary skill in the art without inventive effort shall fall within the protection scope of the present application.

A method for determining a transient neutron flux of a reactor core provided by an embodiment of the present application can be applied to determining the neutron flux of the reactor core under an unsteady state (i.e., a transient state). Optionally, this method can be applied to a server. Specifically, when the reactor core is in the unsteady state, an amplitude value of the reactor core at the previous moment is determined according to the neutron flux of the reactor core at the previous moment, and then a shape value and the amplitude value of the reactor core at the current moment are determined to obtain the neutron flux of the reactor core at the current moment. The server can be an independent server or a server cluster composed of multiple servers.

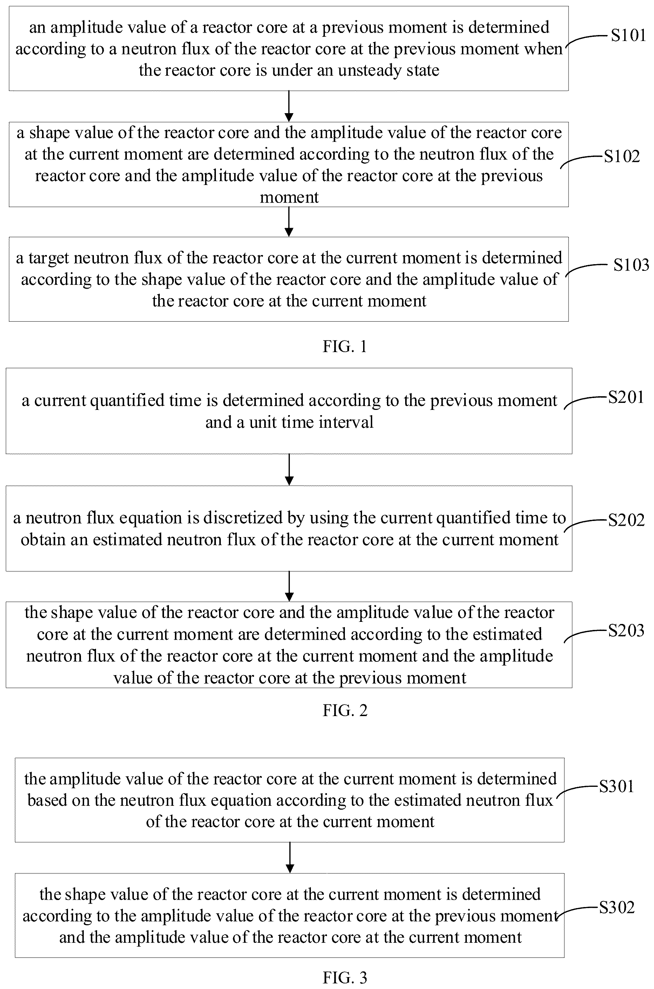

In an embodiment, as shown in FIG. 1, a method for determining a transient neutron flux of a reactor core is provided. This embodiment takes an application of the method to a server as an example. It should be understood that the method can also be applied to a terminal, or a system including a terminal and a server, and implemented through interaction between the terminal and the server. In this embodiment, the method includes the following steps.

In step S101, an amplitude value of a reactor core at a previous moment is determined according to a neutron flux of the reactor core at the previous moment when the core is under an unsteady state.

In this embodiment, the unsteady state refers to the transient state of the reactor core, for example, the transient state caused by a change in the position of a control rod. The unsteady state can be divided into multiple moments according to a preset rule, and time intervals between respective moments can be the same. Based on the idea of a quasi-static method, a neutron flux equation can be separated into time variables and space variables, and decomposed into a shape function and an amplitude function, both related to core energy. Optionally, the amplitude value of the reactor core at each moment can be determined by the amplitude function decomposed from the neutron flux equation.

Optionally, after determining the neutron flux of the reactor core at the previous moment, the amplitude value of the reactor core at the previous moment can be obtained by solving the neutron flux equation according to the neutron flux of the reactor core at the previous moment.

In an implementation, the amplitude function related to the core energy can be extracted from the neutron flux equation. The amplitude value of the reactor core at the previous moment can be determined based on the amplitude function, according to the neutron flux of the reactor core at the previous moment.

The neutron flux equation is the neutron flux equation in the neutron transport dynamics equations. The neutron transport dynamics equations consist of the following formulas (1) and (2). Formula (1) is a neutron flux equation. Formula (2) is a delayed neutron precursor concentration equation.

$$\frac{1}{v_g(\boldsymbol{r},t)}\frac{\partial \psi_g(\boldsymbol{r},\boldsymbol{\Omega},t)}{\partial t} = -\boldsymbol{\Omega}\cdot\nabla\psi_g(\boldsymbol{r},\boldsymbol{\Omega},t) - \Sigma_{t,g}(\boldsymbol{r},t)\psi_g(\boldsymbol{r},\boldsymbol{\Omega},t) +$$

$$\sum_{h=1}^{G}\int_{4\pi}\Sigma_{s,h\to g}(\boldsymbol{r},\boldsymbol{\Omega}'\cdot\boldsymbol{\Omega},t)\psi_h(\boldsymbol{r},\boldsymbol{\Omega}',t)d\boldsymbol{\Omega}' +$$

$$\frac{\chi_g^p(\boldsymbol{r},t)[1-\beta(\boldsymbol{r},t)]}{4\pi k_{eff}^S}\sum_{h=1}^{G}\int_{4\pi}v\Sigma_{f,h}(\boldsymbol{r},t)\psi_h(\boldsymbol{r},\boldsymbol{\Omega}',t)d\boldsymbol{\Omega}' +$$

$$\frac{1}{4\pi}\sum_{m=1}^{M}\chi_{m,g}^d(\boldsymbol{r},t)\lambda_m(\boldsymbol{r},t)C_m(\boldsymbol{r},t) \qquad (1)$$

$$\frac{\partial C_m(\mathbf{r},t)}{\partial t} = \frac{\beta_m(\mathbf{r},t)}{k_{eff}^S}\sum_{h=1}^{G}\int_{4\pi}v\Sigma_{f,h}(\mathbf{r},t)\psi_h(\mathbf{r},\boldsymbol{\Omega}',t)d\boldsymbol{\Omega}'$$

$$-\lambda_m(\mathbf{r},t)C_m(\mathbf{r},t) \qquad (2)$$

where $\psi_g$ ($\boldsymbol{r}$, $\Omega$, $t$) represents the neutron flux, $C_m(\mathbf{r}, t)$ represents the delayed neutron precursor concentration, $\mathbf{r}$ represents spatial variables, $\Omega$ represents angular variables, $t$ represents a time variable, $G$ represents the number of energy groups, $h$ and $g$ represent identifiers for the energy groups, $M$ represents the number of delayed neutron precursor groups, m represents an identifier for a delayed neutron group, $k_{eff}^S$ represents an effective multiplication factor in the initial transient state, The neutron transport dynamics equations include various types of neutron cross-section parameters ($\Sigma_t$ represents a macroscopic total cross-section, $\Sigma_S$ represents a macroscopic scattering cross-section, $v\Sigma_{f,h}$ represents a macroscopic neutron-generating cross-section), and neutron dynamics parameters ($\beta$ represents a delayed neutron fraction, $\lambda$ represents the delayed neutron precursor decay constant, $\chi$ represents a neutron fission spectrum, and $v$ represents a neutron velocity). The superscript $p$ is for indicating prompt neutrons, and $d$ is for indicating delayed neutrons.

Further, the neutron flux equation can be decomposed to extract the amplitude function of the reactor core from the neutron flux equation. Specifically, the amplitude function of the reactor core is shown in formula (3).

$$C_m(\mathbf{r},t) = c_m(t)\cdot\tilde{C}_m(\mathbf{r},t) \qquad (3)$$

After the amplitude function of the reactor core is obtained, based on the extracted amplitude function, the amplitude function and the neutron flux are substituted into the neutron flux equation (i.e., formula (1)) for solution by using the neutron flux of the reactor core at the previous moment, so as to determine the amplitude value of the reactor core at the previous moment.

Optionally, the neutron flux of the reactor core under a stable state serves as the neutron flux of the reactor core at the initial moment when the previous moment is the initial moment. The initial moment refers to the moment when the reactor core is still in the stable state. In the stable state, the neutron flux is considered not to change with time.

Specifically, the neutron flux of the reactor core in the stable state can be obtained by solving the neutron transport dynamics equations, and this neutron flux is used as the neutron flux of the reactor core at the initial moment. Further, the neutron flux equation can be decomposed to extract the amplitude function of the reactor core from the neutron flux equation. Based on the amplitude function, assuming $n_g$ ($t_0$) = 1, according to the neutron flux of the reactor core at the initial moment, the shape function and the neutron flux are substituted into the neutron flux equation (i.e., formula (1)) for solution, so as to determine the amplitude value of the reactor core at the initial moment.

Further, the shape value of the reactor core at the previous moment can also be determined according to the neutron flux of the reactor core at the previous moment. In an implementation, a shape function related to the core energy can be extracted from the neutron flux equation. The shape value of the reactor core at the previous moment can be determined based on the shape function according to the neutron flux of the reactor core at the previous moment.

Specifically, the neutron flux equation can be decomposed to extract the shape function of the reactor core as shown in the following formula (4) from the neutron flux equation.

$$\psi_g(\mathbf{r}, \mathbf{\Omega}, t) = n_g(t) \cdot \tilde{\psi}_g(\mathbf{r}, \mathbf{\Omega}, t) \qquad (4)$$

After the shape function of the reactor core is obtained, based on the extracted shape function, the neutron flux equation is solved according to the neutron flux of the reactor core at the previous moment, so as to determine the shape value of the reactor core at the previous moment.

In step S102, the shape value of the reactor core and the amplitude value of the reactor core at the current moment are determined according to the neutron flux of the reactor core and the amplitude value of the reactor core at the previous moment.

Specifically, after the amplitude value of the reactor core at the previous moment is obtained, the shape value of the reactor core and the amplitude value of the reactor core at the current moment can be solved according to the neutron flux of the reactor core and the amplitude value of the reactor core at the previous moment, in combination with the neutron flux equation through a preset calculation rule.

In step S103, a target neutron flux of the reactor core at the current moment is determined according to the shape value of the reactor core and the amplitude value of the reactor core at the current moment.

Specifically, after the shape value of the reactor core and the amplitude value of the reactor core at the current moment are determined, the shape value of the reactor core and the amplitude value of the reactor core at the current moment are respectively substituted into the amplitude function (i.e., formula (3)) and the shape function (i.e., formula (4)), and the neutron flux equation is solved to obtain the target neutron flux of the reactor core at the current moment.

In the above method for determining the transient neutron flux of the reactor core, when the core is in the unsteady state, the amplitude value at the previous moment is determined according to the neutron flux of the reactor core at the previous moment. The shape value and amplitude value at the current moment are determined based on the amplitude value at the previous moment, and then the target neutron flux at the current moment is determined. By introducing the shape value and the energy-related amplitude value to determine the neutron flux at the current moment, the technical solution achieves higher accuracy and rationality of the neutron flux of the reactor core under the unsteady state without a significant increase in computational load.

To improve the accuracy and rationality of the shape value of the reactor core and the amplitude value of the reactor core at the current moment, in an embodiment, as shown in FIG. 2, the step of determining the shape value of the reactor core and the amplitude value of the reactor core at the current moment according to the neutron flux and the amplitude value of the reactor core at the previous moment specifically includes the following steps.

In step S201, a current quantified time is determined according to the previous moment and a unit time interval.

In this embodiment, the unit time interval is a preset time interval, which is usually shorter than the time intervals between respective moments. The current quantified time indicates a quantified time value determined according to the previous moment and the unit time interval.

Specifically, the current quantified time can be determined by adding the preset unit time interval to the previous moment according to the preset unit time interval, in combination with the previous moment.

In step S202, the neutron flux equation is discretized by using the current quantified time to obtain an estimated neutron flux of the reactor core at the current moment.

In this embodiment, the estimated neutron flux refers to a predicted neutron flux, which cannot be used as the target neutron flux because the estimated neutron flux does not take into account spatial changes of neutrons under the unsteady state.

Specifically, after the current quantified time is determined, the neutron flux equation is discretized using the current quantified time. Optionally, different time discretization methods can be used for discretizing the neutron flux equation, such as the fully implicit time discretization algorithm and the semi-implicit time discretization algorithm. Further, after the neutron flux equation is discretized, the neutron flux of the reactor core at the current moment can be calculated, and the calculated neutron flux is taken as the estimated neutron flux of the reactor core at the current moment.

In step S203, the shape value of the reactor core and the amplitude value of the reactor core at the current moment are determined according to the estimated neutron flux of the reactor core at the current moment and the amplitude value of the reactor core at the previous moment.

Specifically, after the estimated neutron flux of the reactor core at the current moment is obtained, the shape value of the reactor core and the amplitude value of the reactor core at the current moment are determined through the preset calculation rule in combination with the obtained amplitude value of the reactor core at the previous moment.

It can be understood that, by discretizing the neutron flux equation with the current quantified time determined according to the previous moment and the preset unit time interval, the estimated neutron flux of the reactor core at the current moment is obtained. The shape value of the reactor core and the amplitude value of the reactor core at the current moment are then determined in combination with the amplitude value of the reactor core at the previous moment. This improves the accuracy and rationality of the shape value of the reactor core and the amplitude value of the reactor core at the current moment, thereby making the subsequent calculation of the neutron flux of the reactor core at the current moment more accurate and rational.

To further improve the accuracy and rationality of the shape value of the reactor core and the amplitude value of the reactor core at the current moment, in an embodiment, as shown in FIG. 3, the step of determining the shape value of the reactor core and the amplitude value of the reactor core at the current moment according to the estimated neutron flux of the reactor core at the current moment and the amplitude value of the reactor core at the previous moment specifically includes the following steps.

In step S301, the amplitude value of the reactor core at the current moment is determined based on the neutron flux equation according to the estimated neutron flux of the reactor core at the current moment.

Specifically, after the estimated neutron flux of the reactor core at the current moment is obtained, the amplitude value of the reactor core at the current moment can be determined based on the neutron flux equation according to the preset calculation rule by using the estimated neutron flux of the reactor core at the current moment.

In an implementation, the amplitude value of the reactor core at the current moment is determined based on the neutron flux equation according to the estimated neutron flux of the reactor core at the current moment under a preset normalization condition.

The normalization condition is shown in formula (5):

$$\int_V dr \int_{4\pi} \frac{\psi_g^*(\boldsymbol{\Omega})\tilde{\psi}_g(\boldsymbol{\Omega}, t)}{v_g(t)} d\boldsymbol{\Omega} = 1, \quad g = 1, \ldots, G$$

$$\sum_{g=1}^{G} \int_V dr \int_{4\pi} \psi_g^*(\boldsymbol{\Omega}) \chi_{m,g}^d(t) \tilde{C}_m(t) d\boldsymbol{\Omega} = 1, m = 1, \ldots, M \qquad (5)$$

where $\Omega$ represents the angular variables. $t$ represents the time variable, $G$ represents the number of energy groups, $h$ and $g$ represent the identifiers for energy groups, $M$ represents the number of the delayed neutron precursor groups, $m$ represents the identifier for the delayed neutron group, and $\psi_g^*(\boldsymbol{\Omega})$ represents an adjoint neutron flux at time $t_0$.

Specifically, after the estimated neutron flux of the reactor core at the current moment is obtained, based on the neutron flux equation, in combination with the determined estimated neutron flux of the reactor core at the current moment, the neutron flux equation is solved under the normalization condition, so as to determine the amplitude value of the reactor core at the current moment.

In step S302, the shape value of the reactor core at the current moment is determined according to the amplitude value of the reactor core at the previous moment and the amplitude value of the reactor core at the current moment.

Specifically, after the amplitude value of the reactor core at the current moment is determined, the shape value of the reactor core at the current moment is determined through the preset calculation rule in combination with the determined amplitude value of the reactor core at the previous moment.

In an implementation, the neutron dynamics parameters at the current moment are determined according to the amplitude value of the reactor core at the previous moment and the amplitude value of the reactor core at the current moment. The shape value of the reactor core at the current moment is determined according to the amplitude value of the reactor core at the previous moment, the amplitude value of the reactor core at the current moment, and the neutron dynamics parameters at the current moment.

In this embodiment, the neutron dynamics parameters are intermediate variables used to determine the shape value of the reactor core at the current moment.

Specifically, after the amplitude value of the reactor core at the current moment is determined, in combination with the amplitude value of the reactor core at the previous moment, the neutron dynamics parameters corresponding to the shape value of the reactor core at the current moment can be obtained by using the following formulas (6) to (15):

$$F_g \equiv \int_V d\mathbf{r} \int_{4\pi} \left\{ \frac{\psi_g^*(\Omega)\chi_g^s}{4\pi k_{eff}^s} \int_{4\pi} \sum_{h=1}^{G} \nu\Sigma_{f,h}\tilde{\psi}_h(\Omega')d\Omega' \right\} d\Omega \qquad (6)$$

$$\Lambda_g \equiv \frac{\int_V dr \int_{4\pi} \frac{\psi_g^*(\Omega)\tilde{\psi}_g(\Omega)}{v_g} d\Omega}{F_g} = \frac{1}{F_g} \qquad (7)$$

$$\rho_{g,t} \equiv \frac{1}{F_g} \cdot \int_V d\boldsymbol{r} \int_{4\pi} -\Delta\Sigma_{t,g}\tilde{\psi}_g(\boldsymbol{\Omega})\psi_g^*(\boldsymbol{\Omega})d\boldsymbol{\Omega} \qquad (8)$$

$$\rho_{h\to g,s} \equiv \frac{1}{F_g} \cdot \int_V d\boldsymbol{r} \int_{4\pi} \psi_g^*(\boldsymbol{\Omega}) \int_{4\pi} \Sigma_{s,h\to g}(\boldsymbol{\Omega}' \cdot \boldsymbol{\Omega})\tilde{\psi}_h(\boldsymbol{\Omega}')d\boldsymbol{\Omega}' \, d\boldsymbol{\Omega} \qquad (9)$$

$$\rho_{h\to g,s}(t_0) \equiv \frac{1}{F_g} \cdot \int_V d\boldsymbol{r} \int_{4\pi} \psi_g^*(\boldsymbol{\Omega}) \int_{4\pi} \Sigma_{s,g\to h}(\boldsymbol{\Omega}' \cdot \boldsymbol{\Omega}, t_0)\tilde{\psi}_h(\boldsymbol{\Omega}')d\boldsymbol{\Omega}' \, d\boldsymbol{\Omega} \qquad (10)$$

$$\rho_{h\to g,f} \equiv \frac{1}{F_g} \cdot \int_V d\boldsymbol{r} \int_{4\pi} \frac{\psi_g^*(\boldsymbol{\Omega})\chi_g^s}{4\pi k_{eff}^s} \int_{4\pi} \sum_{h=1}^G \nu\Sigma_{f,h}\tilde{\psi}_h(\boldsymbol{\Omega}')d\boldsymbol{\Omega}' \qquad (11)$$

$$\rho_{h\to g,f}(t_0) \equiv \frac{1}{F_g} \cdot \int_V d\boldsymbol{r} \int_{4\pi} \frac{\psi_g^*(\boldsymbol{\Omega})\nu\Sigma_{f,g}(t_0)}{4\pi k_{eff}^s} \int_{4\pi} \sum_{h=1}^G \chi_h^s\tilde{\psi}_h(\boldsymbol{\Omega}')d\boldsymbol{\Omega}' \qquad (12)$$

$$\bar{\beta}_{h\to g,m} \equiv \frac{\int_V d\boldsymbol{r} \int_{4\pi} d\boldsymbol{\Omega}\left\{\psi_g^*(\boldsymbol{\Omega})\frac{\chi_{m,g}^d\beta_m}{4\pi k_{eff}^s} \int_{4\pi} \nu\Sigma_{f,h}\tilde{\psi}_h(\boldsymbol{\Omega}')d\boldsymbol{\Omega}'\right\}}{F_g} \qquad (13)$$

$$\bar{\beta}_{h\to g} = \sum_{m=1}^M \bar{\beta}_{h\to g,m} \qquad (14)$$

$$\bar{\lambda}_m \equiv \frac{\sum_{g=1}^G \int_V d\boldsymbol{r} \int_{4\pi} d\boldsymbol{\Omega}\left\{\psi_g^*(\boldsymbol{\Omega})\frac{1}{4\pi}\chi_{m,g}^d\lambda_m\tilde{C}_m\right\}}{\sum_{g=1}^G \int_V d\boldsymbol{r} \int_{4\pi} d\boldsymbol{\Omega}\left\{\psi_g^*(\boldsymbol{\Omega})\frac{1}{4\pi}\chi_{m,g}^d\tilde{C}_m\right\}} = \sum_{g=1}^G \int_V d\boldsymbol{r} \int_{4\pi} d\boldsymbol{\Omega}\left\{\psi_g^*(\boldsymbol{\Omega})\chi_{m,g}^d\lambda_m\tilde{C}_m\right\} \qquad (15)$$

where $\Delta\Sigma_x = \Sigma_x(t) - E_x(t_0)$ represents a change in a cross-section, the cross-section may include, but is not limited to, a total cross-section, a fission cross-section, or a scattering cross-section, $x$ represents a reaction channel of the cross-section, $\psi_g(\boldsymbol{r}, \boldsymbol{\Omega}, t)$ represents the neutron flux, $C_m(\boldsymbol{r}, t)$ represents the delayed neutron precursor concentration, $\boldsymbol{r}$ represents the spatial variables, $\boldsymbol{\Omega}$ represents the angular variables, $t$ represents the time variable, $G$ represents the number of energy groups, $h$ and $g$ represent the identifiers for the energy groups, $M$ represents the number of the delayed neutron precursor groups, m represents the identifier for the delayed neutron group, $k_{eff}^s$ represents the effective multiplication factor in the initial transient state, $\Sigma_t$ represents the macroscopic total cross-section, $\Sigma_S$ represents the macroscopic scattering cross-section, $\nu\Sigma_{f,h}$ represents the macroscopic neutron-generating cross-section, $\beta$ represents the delayed neutron fraction, $\lambda$ represents the delayed neutron precursor decay constant, $\chi$ represents the neutron fission spectrum, and $\nu$ represents the neutron velocity.

Further, after the neutron dynamics parameters corresponding to the amplitude value of the reactor core at the current moment are obtained, the shape value of the reactor core at the current moment can be determined by using the following formulas (16) and (17) according to the amplitude value of the reactor core at the previous moment, the amplitude value of the reactor core at the current moment, and the neutron dynamics parameters at the current moment.

$$\frac{dn_g}{dt} = n_g\frac{\rho_{g,t}}{\Lambda_g} + \sum_{h=1}^G n_h\frac{\rho_{h\to g,s} + \rho_{h\to g,f} - \bar{\beta}_{h\to g}}{\Lambda_g}$$

$$- n_g \sum_{h=1}^G \frac{\rho_{h\to g,s}(t_0)+\rho_{h\to g,f}(t_0)}{\Lambda_g} + \sum_{m=1}^M \bar{\lambda}_m c_m \qquad (16)$$

$$\frac{dc_m}{dt} = -\bar{\lambda}_m c_m + \sum_{g=1}^G \sum_{h=1}^G n_h\frac{\bar{\beta}_{h\to g,m}}{\Lambda_g} \qquad (17)$$

where $t$ represents the time variable, $G$ represents the number of the energy groups, $h$ and $g$ represent the identifiers for the energy groups, *M* represents the number of the delayed neutron precursor groups, *m* represents the identifier for the delayed neutron group, β represents the delayed neutron fraction, and λ represents the delayed neutron precursor decay constant.

It can be understood that the amplitude value of the reactor core at the current moment is determined based on the neutron flux equation using the estimated neutron flux at the current moment. Further, the shape value of the reactor core at the current moment is determined through the amplitude value of the reactor core at the current moment in combination with the amplitude value of the reactor core at the previous moment. This improves the accuracy and rationality of the determination for the shape value of the reactor core and the amplitude value of the reactor core at the current moment, thereby enhancing the accuracy and rationality of the subsequent determination of the neutron flux of the reactor core at the current moment.

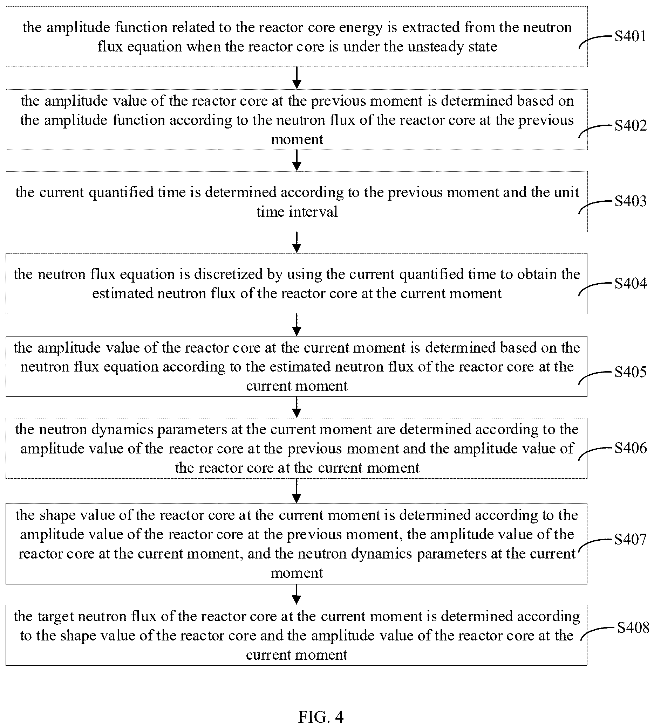

In an embodiment, as shown in FIG. 4, a specific example of the method for determining the transient neutron flux of the reactor core is provided, which specifically includes the following steps.

In step S401, the amplitude function related to the core energy is extracted from the neutron flux equation when the core is under the unsteady state.

In step S402, the amplitude value of the reactor core at the previous moment is determined based on the amplitude function according to the neutron flux of the reactor core at the previous moment.

In step S403, the current quantified time is determined according to the previous moment and the unit time interval.

In step S404, the neutron flux equation is discretized by using the current quantified time to obtain the estimated neutron flux of the reactor core at the current moment.

In step S405, the amplitude value of the reactor core at the current moment is determined based on the neutron flux equation according to the estimated neutron flux of the reactor core at the current moment.

In step S406, the neutron dynamics parameters at the current moment are determined according to the amplitude value of the reactor core at the previous moment and the amplitude value of the reactor core at the current moment.

In step S407, the shape value of the reactor core at the current moment is determined according to the amplitude value of the reactor core at the previous moment, the amplitude value of the reactor core at the current moment, and the neutron dynamics parameters at the current moment.

In step S408, the target neutron flux of the reactor core at the current moment is determined according to the shape value of the reactor core and the amplitude value of the reactor core at the current moment.

The specific procedures of steps S401-S408 can be referred to the description of the method in the above embodiments, and their implementation principles and technical effects are similar, which will not be repeated here.

It should be understood that, although the steps in the flowcharts involved in the above embodiments are shown in sequence according to arrows, these steps are not necessarily executed in the sequence indicated by the arrows. Unless otherwise clearly specified herein, there is no strict sequence restriction on the execution of these steps, and these steps can be executed in other sequences. In addition, at least some of the steps in the flowcharts involved in the above embodiments may include multiple steps or stages, which are not necessarily executed at the same time, but can be executed at different times. The execution sequence of these steps or stages is not necessarily sequential but can be sequentially or alternately executed with at least part of the steps or stages in other steps.

Based on the same inventive concept, an embodiment of the present application also provides an apparatus for determining the transient neutron flux of the reactor core for implementing the above-mentioned method for determining the transient neutron flux of the reactor core. The implementations for solving the problem provided by the apparatus are similar to those recited in the above methods. Therefore, the specific definitions in one or more embodiments of the apparatus for determining the transient neutron flux of the reactor core provided below can be referred to the definitions of the above method for determining the transient neutron flux of the reactor core, which will not be repeated here.

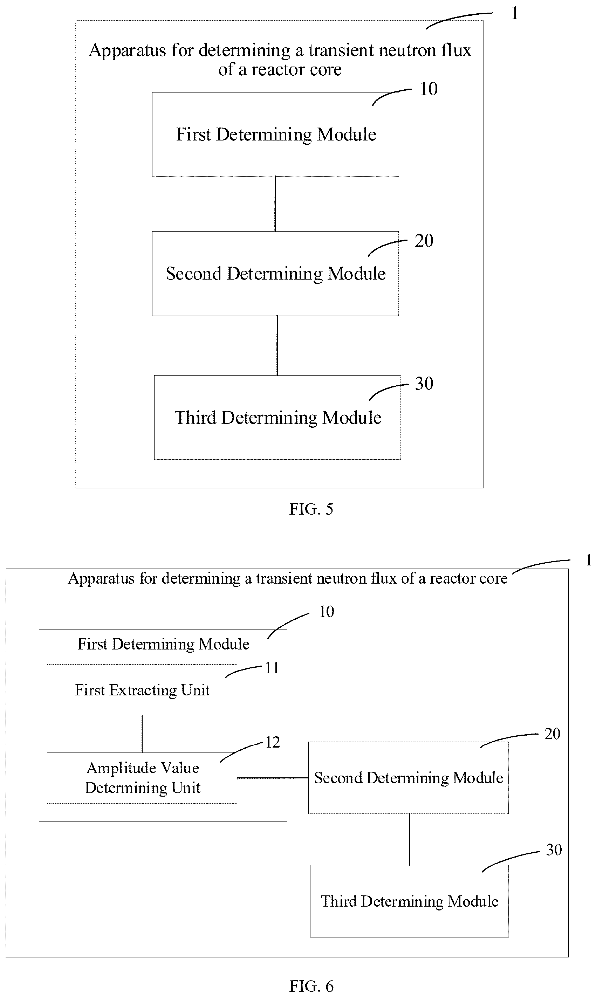

In an embodiment, as shown in FIG. 5, an apparatus 1 for determining a transient neutron flux of a reactor core is provided, including a first determining module 10, a second determining module 20, and a third determining module 30.

The first determining module 10 is configured to determine the amplitude value of the reactor core at a previous moment according to the neutron flux of the reactor core at the previous moment when the core is under the unsteady state.

The second determining module 20 is configured to determine the shape value of the reactor core and the amplitude value of the reactor core at the current moment according to the neutron flux of the reactor core and the amplitude value of the reactor core at the previous moment.

The third determining module 30 is configured to determine the target neutron flux of the reactor core at the current moment according to the shape value of the reactor core and amplitude value of the reactor core at the current moment.

In an embodiment, on the basis of FIG. 5, as shown in FIG. 6, the first determining module 10 may include:

a first extracting unit 11 is configured to extract the amplitude function related to the core energy from the neutron flux equation; and

an amplitude value determining unit 12 is configured to determine the amplitude value of the reactor core at the previous moment based on the amplitude function according to the neutron flux of the reactor core at the previous moment.

In an embodiment, the apparatus 1 for determining the transient neutron flux of the reactor core may further include:

an initial determining module is configured to take the neutron flux of the reactor core under the stable state as the neutron flux of the reactor core at the initial moment when the previous moment is the initial moment.

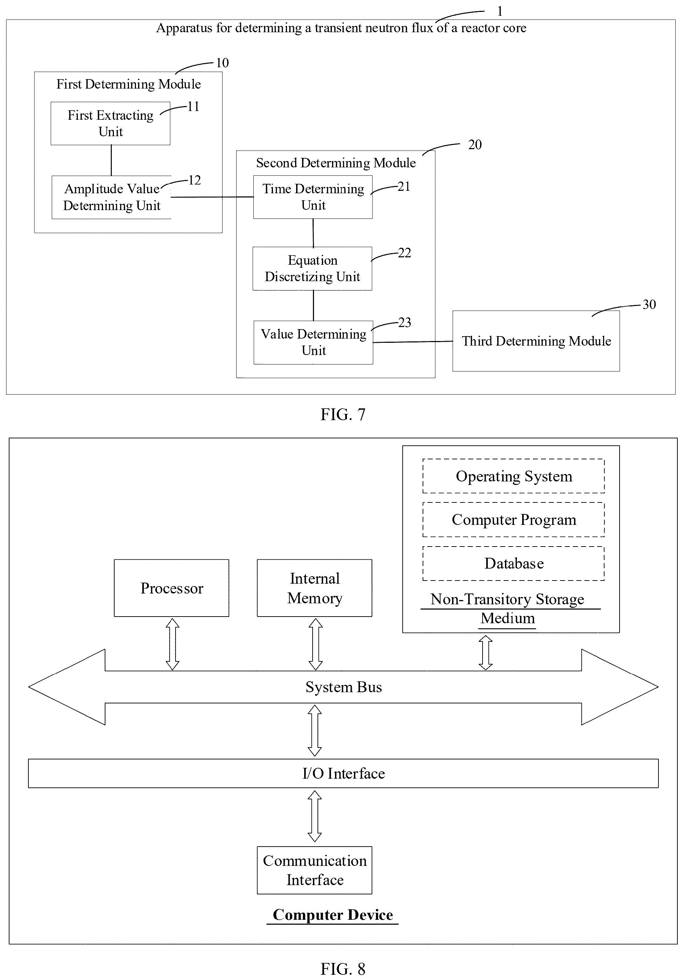

In an embodiment, on the basis of FIG. 5 or FIG. 6, as shown in FIG. 7, the second determining module 20 may include:

a time determining unit 21 is configured to determine the current quantified time according to the previous moment and the unit time interval;.

an equation discretizing unit 22 is configured to discretize the neutron flux equation by using the current quantified time to obtain the estimated neutron flux of the reactor core at the current moment; and

a value determining unit 23 is configured to determine the shape value of the reactor core and the amplitude value of the reactor core at the current moment according to the estimated neutron flux of the reactor core at the current moment and the amplitude value of the reactor core at the previous moment.

In an embodiment, the value determining unit 23 may specifically include:

an amplitude value determining subunit is configured to determine the amplitude value of the reactor core at the current moment based on the neutron flux equation according to the estimated neutron flux of the reactor core at the current moment; and

a shape value determining subunit is configured to determine the shape value of the reactor core at the current moment according to the amplitude value of the reactor core at the previous moment and the amplitude value of the reactor core at the current moment.

In an embodiment, the shape value determining subunit can be specifically configured to:

determine the neutron dynamics parameters at the current moment according to the amplitude value of the reactor core at the previous moment and the amplitude value of the reactor core at the current moment; and

determine the shape value of the reactor core at the current moment according to the amplitude value of the reactor core at the previous moment, the amplitude value of the reactor core at the current moment, and the neutron dynamics parameters at the current moment.

Each module in the above apparatus for determining the transient neutron flux of the reactor core can be fully or partially implemented by software, hardware, or a combination thereof. Each of the above modules can be embedded in or independent of a processor of a computer device in the form of hardware, or stored in a memory of the computer device in the form of software, so that the processor can call and execute the corresponding operations of each of the modules.

In an embodiment, a computer device is provided. The computer device may be a server, and the internal structure of the computer device can be as shown in FIG. 8. The computer device includes a processor, a memory, and a network interface, which are connected through a system bus. The processor of the computer device is configured to provide computing and control capabilities. The memory of the computer device includes a non-transitory storage medium and an internal memory. The non-transitory storage medium stores an operating system, a computer program, and a database. The internal memory provides an environment for the operation of the operating system and the computer program in the non-transitory storage medium. The database of the computer device is configured to store data such as the neutron flux of the reactor core at the previous moment, the shape value of the reactor core, or the amplitude value of the reactor core at the previous moment. The network interface of the computer device is configured to communicate with an external terminal through a network connection. The computer program, when executed by the processor, implements the method for determining the transient neutron flux of the reactor core.

Those skilled in the art can understand that, the structure shown in FIG. 8 only involves a block diagram of a part of the structure related to the technical solution of the present application, and does not constitute a limitation on the computer device to which the solution of the present application is applied. A specific computer device may include more or fewer components than those shown in the drawings, combine some components, or have different component arrangements.

In an embodiment, a computer device is provided, including a memory and a processor, where the memory stores a computer program, and the processor, when executing the computer program, implements the following steps:

determining the amplitude value of the reactor core at the previous moment according to the neutron flux of the reactor core at the previous moment when the core is under an unsteady state;

determining the shape value of the reactor core and the amplitude value of the reactor core at the current moment according to the amplitude value of the reactor core and the neutron flux of the reactor core at the previous moment; and

determining the target neutron flux of the reactor core at the current moment according to the shape value of the reactor core and the amplitude value of the reactor core at the current moment.

In an embodiment, when the processor executes the computer program to implement the logic of determining the amplitude value of the reactor core at the previous moment according to the neutron flux of the reactor core at the previous moment, the following steps are further implemented below:

extracting the amplitude function related to the core energy from the neutron flux equation; and

determining the amplitude value of the reactor core at the previous moment based on the amplitude function according to the neutron flux of the reactor core at the previous moment.

In an embodiment, when the processor executes the computer program, the following steps are further implemented below:

serving the neutron flux of the reactor core under a stable state as the neutron flux of the reactor core at the initial moment when the previous moment is the initial moment.

In an embodiment, when the processor executes the computer program to implement the logic of determining the shape value of the reactor core and the amplitude value of the reactor core at the current moment according to the neutron flux and the amplitude value of the reactor core at the previous moment, the following steps are further implemented below:

determining the current quantified time according to the previous moment and the unit time interval;

discretizing the neutron flux equation by using the current quantified time to obtain the estimated neutron flux of the reactor core at the current moment; and

determining the shape value of the reactor core and the amplitude value of the reactor core at the current moment according to the estimated neutron flux of the reactor core at the current moment, and the amplitude value of the reactor core at the previous moment.

In an embodiment, when the processor executes the computer program to implement the logic of determining the shape value of the reactor core and the amplitude value of the reactor core at the current moment according to the estimated neutron flux of the reactor core at the current moment and the amplitude value of the reactor core at the previous moment, the following steps are further implemented below:

determining the amplitude value of the reactor core at the current moment based on the neutron flux equation according to the estimated neutron flux of the reactor core at the current moment; and

determining the shape value of the reactor core at the current moment according to the amplitude value of the reactor core at the previous moment and the amplitude value of the reactor core at the current moment.

In an embodiment, when the processor executes the computer program to implement the logic of determining the shape value of the reactor core at the current moment according to the amplitude value of the reactor core at the previous moment and the amplitude value of the reactor core at the current moment, the following steps are further implemented below:

determining the neutron dynamics parameters at the current moment according to the amplitude value of the reactor core at the previous moment and the amplitude value of the reactor core at the current moment; and

determining the shape value of the reactor core at the current moment according to the amplitude value of the reactor core at the previous moment, the amplitude value of the reactor core at the current moment, and the neutron dynamics parameters at the current moment.

In an embodiment, a computer-readable storage medium is provided, a computer program is stored thereon, and the computer program, when executed by a processor, implements the following steps:

determining the amplitude value of the reactor core at the previous moment according to the neutron flux of the reactor core at the previous moment, when the core is under the unsteady state;

determining the shape value of the reactor core and the amplitude value of the reactor core at the current moment according to the neutron flux of the reactor core and the amplitude value of the reactor core at the previous moment; and

determining the target neutron flux of the reactor core at the current moment according to the shape value of the reactor core and the amplitude value of the reactor core at the current moment.

In an embodiment, when the logic of the computer program for determining the amplitude value of the reactor core at the previous moment according to the neutron flux of the reactor core at the previous moment is executed by the processor, the following steps are further implemented below:

extracting the amplitude function related to the core energy from the neutron flux equation; and

determining the amplitude value of the reactor core at the previous moment based on the amplitude function according to the neutron flux of the reactor core at the previous moment.

In an embodiment, when the computer program is executed by the processor, the following steps are further implemented below:

serving the neutron flux of the reactor core under the stable state as the neutron flux of the reactor core at the initial moment when the previous moment is the initial moment.

In an embodiment, when the logic of the computer program for determining the shape value of the reactor core and the amplitude value of the reactor core at the current moment according to the neutron flux of the reactor core and the amplitude value of the reactor core at the previous moment is executed by the processor, the following steps are further implemented below:

determining the current quantified time according to the previous moment and the unit time interval;

discretizing the neutron flux equation by using the current quantified time to obtain the estimated neutron flux of the reactor core at the current moment; and

determining the shape value of the reactor core and the amplitude value of the reactor core at the current moment according to the estimated neutron flux of the reactor core at the current moment and the amplitude value of the reactor core at the previous moment.

In an embodiment, when the logic of the computer program for determining the shape value of the reactor core and the amplitude value of the reactor core at the current moment according to the estimated neutron flux of the reactor core at the current moment and the amplitude value of the reactor core at the previous moment is executed by the processor, the following steps are further implemented below:

determining the amplitude value of the reactor core at the current moment based on the neutron flux equation according to the estimated neutron flux of the reactor core at the current moment; and

determining the shape value of the reactor core at the current moment according to the amplitude value of the reactor core at the previous moment and the amplitude value of the reactor core at the current moment.

In an embodiment, when the logic of the computer program for determining the shape value of the reactor core at the current moment according to the amplitude value of the reactor core at the previous moment and the amplitude value of the reactor core at the current moment is executed by the processor, the following steps are further implemented below:

determining the neutron dynamics parameters at the current moment according to the amplitude value of the reactor core at the previous moment and the amplitude value of the reactor core at the current moment; and

determining the shape value of the reactor core at the current moment according to the amplitude value of the reactor core at the previous moment, the amplitude value of the reactor core at the current moment, and the neutron dynamics parameters at the current moment.

In an embodiment, a computer program product is provided, including a computer program, and the computer program, when executed by a processor, implements the following steps:

determining the amplitude value of the reactor core at the previous moment according to the neutron flux of the reactor core at the previous moment, when the core is under the unsteady state;

determining the shape value of the reactor core and the amplitude value of the reactor core at the current moment according to the neutron flux of the reactor core and the amplitude value of the reactor core at the previous moment; and

determining the target neutron flux of the reactor core at the current moment according to the shape value of the reactor core and the amplitude value of the reactor core at the current moment.

In an embodiment, when the logic of the computer program for determining the amplitude value of the reactor core at the previous moment according to the neutron flux of the reactor core at the previous moment is executed by the processor, the following steps are further implemented below:

extracting the amplitude function related to the core energy from the neutron flux equation; and
determining the amplitude value of the reactor core at the previous moment based on the amplitude function according to the neutron flux of the reactor core at the previous moment.

In an embodiment, when the computer program is executed by the processor, the following steps are further implemented below:
serving the neutron flux of the reactor core under the stable state as the neutron flux of the reactor core at the initial moment when the previous moment is the initial moment.

In an embodiment, when the logic of the computer program for determining the shape value of the reactor core and the amplitude value of the reactor core at the current moment according to the neutron flux and the amplitude value of the reactor core at the previous moment is executed by the processor, the following steps are further implemented below:

determining the current quantified time according to the previous moment and the unit time interval;
discretizing the neutron flux equation by using the current quantified time to obtain the estimated neutron flux of the reactor core at the current moment; and
determining the shape value of the reactor core and the amplitude value of the reactor core at the current moment according to the estimated neutron flux of the reactor core at the current moment and the amplitude value of the reactor core at the previous moment.

In an embodiment, when the logic of the computer program for determining the shape value of the reactor core and the amplitude value of the reactor core at the current moment according to the estimated neutron flux of the reactor core at the current moment and the amplitude value of the reactor core at the previous moment is executed by the processor, the following steps are further implemented below:

determining the amplitude value of the reactor core at the current moment based on the neutron flux equation according to the estimated neutron flux of the reactor core at the current moment; and
determining the shape value of the reactor core at the current moment according to the amplitude value of the reactor core at the previous moment and the amplitude value of the reactor core at the current moment.

In an embodiment, when the logic of the computer program for determining the shape value of the reactor core at the current moment according to the amplitude value of the reactor core at the previous moment and the amplitude value of the reactor core at the current moment is executed by the processor, the following steps are further implemented below:

determining the neutron dynamics parameters at the current moment according to the amplitude value of the reactor core at the previous moment and the amplitude value of the reactor core at the current moment; and
determining the shape value of the reactor core at the current moment according to the amplitude value of the reactor core at the previous moment, the amplitude value of the reactor core at the current moment, and the neutron dynamics parameters at the current moment.

It should be noted that, the data (including but not limited to the neutron flux of the reactor core at the previous moment, the shape value of the reactor core, and the amplitude value of the reactor core at the previous moment) involved in the present application are all information and data authorized by relevant parties.

Those of ordinary skill in the art can understand that all or part of the processes in the methods of the above embodiments can be implemented by instructing relevant hardware through a computer program. The computer program can be stored in a non-transitory computer-readable storage medium. When the computer program is executed, the processes of the method provided in the above embodiments can be included. The non-transitory storage medium described in the present application may include a read-only memory (ROM), a magnetic tape, a floppy disk, a flash memory, an optical memory, a high-density embedded non-transitory memory, a resistive random-access memory (ReRAM), a magnetoresistive random-access memory (MRAM), a ferroelectric random-access memory (FRAM), a phasechange memory (PCM), a graphene memory, etc. A transitory memory may include a random-access memory (RAM), an external cache, etc. By way of illustration and not limitation, the RAM may be in various forms such as static random-access memory (SRAM) or dynamic random-access memory (DRAM). The database involved in the embodiments of the present application may include at least one of a relational database or a non-relational database. The non-relational database may include such as a distributed database based on blockchains, but is not limited thereto. The processor involved in the embodiments of the present application may be a general-purpose processor, a central processing unit, a graphics processor, a digital signal processor, a programmable logic device, a data processing logic device based on quantum computing, etc., but is not limited thereto.

The technical features of the above embodiments can be combined arbitrarily. To make the description concise, not all possible combinations of the technical features are described in the above embodiments. However, as long as there is no contradiction between the combinations of these technical features, the combinations fall within the scope recited in this specification.

The above embodiments only explain several implementations of the present application. Their descriptions are specific and detailed, but they should not be construed as limiting the scope of the present application. It should be noted that for those of ordinary skill in the art, several modifications and improvements can be made without departing from the inventive concept of the present application, and these modifications and improvements all fall within the protection scope of the present application. Therefore, the protection scope of the present application shall be subject to the appended claims.

**Claims**

1. A method for determining a transient neutron flux of a reactor core, **characterized in that**, the method comprises:

    determining an amplitude value of the reactor core at a previous moment according to a neutron flux of the reactor core at the previous moment, when the core is under an unsteady state;
    determining a shape value of the reactor core and the amplitude value of the reactor core at the current moment according to the neutron flux of the reactor core and the amplitude value of the reactor core at the previous moment; and
    determining a target neutron flux of the reactor core at the current moment according to the shape value of the reactor core and the amplitude value of the reactor core at the current moment.

2. The method according to claim 1, **characterized in that**, the determining the amplitude value of the reactor core at the previous moment according to the neutron flux of the reactor core at the previous moment comprises:

    extracting an amplitude function related to a core energy from a neutron flux equation; and
    determining the amplitude value of the reactor core at the previous moment based on the amplitude function according to the neutron flux of the reactor core at the previous moment.

3. The method according to claim 1, **characterized in that**, the method further comprises:
serving the neutron flux of the reactor core under a stable state as the neutron flux of the reactor core at an initial moment when the previous moment is the initial moment.

4. The method according to claim 1, wherein the determining the shape value of the reactor core and the amplitude value of the reactor core at the current moment according to the neutron flux of the reactor core and the amplitude value of the reactor core at the previous moment comprises:

    determining a current quantified time according to the previous moment and a unit time interval;
    discretizing a neutron flux equation by using the current quantified time to obtain an estimated neutron flux of the reactor core at the current moment; and
    determining the shape value of the reactor core and the amplitude value of the reactor core at the current moment according to the estimated neutron flux of the reactor core at the current moment and the amplitude value of the reactor core at the previous moment.

5. The method according to claim 4, **characterized in that**, the determining the shape value of the reactor core and the amplitude value of the reactor core at the current moment according to the estimated neutron flux of the reactor core at the current moment and the amplitude value of the reactor core at the previous moment comprises:

    determining the amplitude value of the reactor core at the current moment based on the neutron flux equation according to the estimated neutron flux of the reactor core at the current moment; and
    determining the shape value of the reactor core at the current moment according to the amplitude value of the reactor core at the previous moment and the amplitude value of the reactor core at the current moment.

6. The method according to claim 5, **characterized in that**, the determining the shape value of the reactor core at the current moment according to the amplitude value of the reactor core at the previous moment and the amplitude value of the reactor core at the current moment comprises:

determining neutron dynamics parameters at the current moment according to the amplitude value of the reactor core at the previous moment and the amplitude value of the reactor core at the current moment; and determining the shape value of the reactor core at the current moment according to the amplitude value of the reactor core at the previous moment, the amplitude value of the reactor core at the current moment, and the neutron dynamics parameters at the current moment.

7. An apparatus for determining a transient neutron flux of a reactor core, **characterized in that**, the apparatus comprises:

a first determining module, configured to determine an amplitude value of the reactor core at a previous moment according to a neutron flux of the reactor core at the previous moment when the core is under an unsteady state; a second determining module, configured to determine a shape value of the reactor core and the amplitude value of the reactor core at the current moment according to the neutron flux of the reactor core and the amplitude value of the reactor core at the previous moment; and a third determining module, configured to determine a target neutron flux of the reactor core at the current moment according to the shape value of the reactor core and the amplitude value of the reactor core at the current moment.

8. The apparatus according to claim 7, **characterized in that**, the first determining module comprises:

a first extracting unit, configured to extract an amplitude function related to a core energy from a neutron flux equation; and an amplitude value determining unit, configured to determine the amplitude value of the reactor core at the previous moment based on the amplitude function according to the neutron flux of the reactor core at the previous moment.

9. The apparatus according to claim 7, **characterized in that**, the apparatus further comprises: an initial determining module, configured to take the neutron flux of the reactor core under a stable state as the neutron flux of the reactor core at the initial moment when the previous moment is an initial moment.

10. The apparatus according to claim 7, **characterized in that**, the second determining module comprises:

a time determining unit, configured to determine a current quantified time according to the previous moment and a unit time interval; an equation discretizing unit, configured to discretize a neutron flux equation by using the current quantified time to obtain the estimated neutron flux of the reactor core at the current moment; and a value determining unit, configured to determine the shape value and amplitude value of the reactor core at the current moment according to an estimated neutron flux of the reactor core at the current moment and the amplitude value of the reactor core at the previous moment.

11. The apparatus according to claim 10, **characterized in that**, the value determining unit comprises:

an amplitude value determining subunit, configured to determine the amplitude value of the reactor core at the current moment based on the neutron flux equation according to the estimated neutron flux of the reactor core at the current moment; and a shape value determining subunit, configured to determine the shape value of the reactor core at the current moment according to the amplitude value of the reactor core at the previous moment and the amplitude value of the reactor core at the current moment.

12. The apparatus according to claim 11, **characterized in that**, the shape value determining subunit is further configured to:

determine neutron dynamics parameters at the current moment according to the amplitude value of the reactor core at the previous moment and the amplitude value of the reactor core at the current moment; and determine the shape value of the reactor core at the current moment according to the amplitude value of the reactor core at the previous moment, the amplitude value of the reactor core at the current moment, and the neutron dynamics parameters at the current moment.

13. A computer device, comprising a memory and a processor, wherein the memory stores a computer program, **characterized in that**, the processor, when executing the computer program, implements the steps of the method according to any one of claims 1 to 6.

14. A computer-readable storage medium, wherein a computer program is stored thereon, **characterized in that**, the computer program, when executed by a processor, implements the steps of the method according to any one of claims 1 to 6.

15. A computer program product, comprising a computer program, **characterized in that**, the computer program, when executed by a processor, implements the steps of the method according to any one of claims 1 to 6.

an amplitude value of a reactor core at a previous moment is determined according to a neutron flux of the reactor core at the previous moment when the reactor core is under an unsteady state ⟋— S101

a shape value of the reactor core and the amplitude value of the reactor core at the current moment are determined according to the neutron flux of the reactor core and the amplitude value of the reactor core at the previous moment ⟋— S102

a target neutron flux of the reactor core at the current moment is determined according to the shape value of the reactor core and the amplitude value of the reactor core at the current moment ⟋— S103

FIG. 1

a current quantified time is determined according to the previous moment and a unit time interval ⟋— S201

a neutron flux equation is discretized by using the current quantified time to obtain an estimated neutron flux of the reactor core at the current moment ⟋— S202

the shape value of the reactor core and the amplitude value of the reactor core at the current moment are determined according to the estimated neutron flux of the reactor core at the current moment and the amplitude value of the reactor core at the previous moment ⟋— S203

FIG. 2

the amplitude value of the reactor core at the current moment is determined based on the neutron flux equation according to the estimated neutron flux of the reactor core at the current moment ⟋— S301

the shape value of the reactor core at the current moment is determined according to the amplitude value of the reactor core at the previous moment and the amplitude value of the reactor core at the current moment ⟋— S302

FIG. 3

the amplitude function related to the reactor core energy is extracted from the neutron flux equation when the reactor core is under the unsteady state — S401

the amplitude value of the reactor core at the previous moment is determined based on the amplitude function according to the neutron flux of the reactor core at the previous moment — S402

the current quantified time is determined according to the previous moment and the unit time interval — S403

the neutron flux equation is discretized by using the current quantified time to obtain the estimated neutron flux of the reactor core at the current moment — S404

the amplitude value of the reactor core at the current moment is determined based on the neutron flux equation according to the estimated neutron flux of the reactor core at the current moment — S405

the neutron dynamics parameters at the current moment are determined according to the amplitude value of the reactor core at the previous moment and the amplitude value of the reactor core at the current moment — S406

the shape value of the reactor core at the current moment is determined according to the amplitude value of the reactor core at the previous moment, the amplitude value of the reactor core at the current moment, and the neutron dynamics parameters at the current moment — S407

the target neutron flux of the reactor core at the current moment is determined according to the shape value of the reactor core and the amplitude value of the reactor core at the current moment — S408

FIG. 4

FIG. 5

FIG. 6

Apparatus for determining a transient neutron flux of a reactor core — 1

First Determining Module — 10

First Extracting Unit — 11

Amplitude Value Determining Unit — 12

Second Determining Module — 20

Time Determining Unit — 21

Equation Discretizing Unit — 22

Value Determining Unit — 23

Third Determining Module — 30

FIG. 7

Operating System

Computer Program

Database

Non-Transitory Storage Medium

Processor

Internal Memory

System Bus

I/O Interface

Communication Interface

**Computer Device**

FIG. 8

## INTERNATIONAL SEARCH REPORT

| International application No. |
| --- |
| **PCT/CN2024/087293** |

| A. CLASSIFICATION OF SUBJECT MATTER |
| --- |
| G21C17/108(2006.01)i |
| |
| According to International Patent Classification (IPC) or to both national classification and IPC |

| B. FIELDS SEARCHED |
| --- |
| Minimum documentation searched (classification system followed by classification symbols) |
| G21C17/-, G06F17/- (IPC) |

| Documentation searched other than minimum documentation to the extent that such documents are included in the fields searched |
| --- |
| |

| Electronic data base consulted during the international search (name of data base and, where practicable, search terms used) |
| --- |
| CNTXT, ENTXTC, DWPI, CNKI: 堆芯, 瞬态, 中子, 注量率, 幅度, 形状, 稳定, reactor, core, transient, neutron, flux, amplitude, shape, stabl+ |

### C. DOCUMENTS CONSIDERED TO BE RELEVANT

| Category* | Citation of document, with indication, where appropriate, of the relevant passages | Relevant to claim No. |
| --- | --- | --- |
| PX | CN 116434987 A (CHINA NUCLEAR POWER TECHNOLOGY RESEARCH INSTITUTE CO. LTD. et al.) 14 July 2023 (2023-07-14) claims 1-10, description, paragraphs 0052-0208, and figures 1-8 | 1-15 |
| A | CN 104318063 A (UNIVERSITY OF SOUTH CHINA) 28 January 2015 (2015-01-28) description, paragraphs 0014-0045, and figures 1-3 | 1-15 |
| A | CN 107066745 A (XI'AN JIAOTONG UNIVERSITY) 18 August 2017 (2017-08-18) entire document | 1-15 |
| A | CN 106297920 A (HEFEI INSTITUTES OF PHYSICAL SCIENCE, CHINESE ACADEMY OF SCIENCES) 04 January 2017 (2017-01-04) entire document | 1-15 |
| A | CN 106571168 A (STATE NUCLEAR POWER RESEARCH INSTITUTE) 19 April 2017 (2017-04-19) entire document | 1-15 |
| A | CN 111782384 A (SUN YAT-SEN UNIVERSITY) 16 October 2020 (2020-10-16) entire document | 1-15 |

| ☑ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **18 July 2024** | **24 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/087293** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 6400786 B1 (FRAMATOME SA) 04 June 2002 (2002-06-04) entire document | 1-15 |

Form PCT/ISA/210 (second sheet) (July 2022)

**INTERNATIONAL SEARCH REPORT**
Information on patent family members

International application No.

**PCT/CN2024/087293**

| Patent document cited in search report | | | Publication date (day/month/year) | Patent family member(s) | | | Publication date (day/month/year) |
|---|---|---|---|---|---|---|---|
| CN | 116434987 | A | 14 July 2023 | None | | | |
| CN | 104318063 | A | 28 January 2015 | None | | | |
| CN | 107066745 | A | 18 August 2017 | None | | | |
| CN | 106297920 | A | 04 January 2017 | None | | | |
| CN | 106571168 | A | 19 April 2017 | None | | | |
| CN | 111782384 | A | 16 October 2020 | None | | | |
| US | 6400786 | B1 | 04 June 2002 | FR | 2796197 | A1 | 12 January 2001 |
| | | | | FR | 2796197 | B1 | 12 October 2001 |
| | | | | JP | 2001033581 | A | 09 February 2001 |
| | | | | JP | 4999221 | B2 | 15 August 2012 |
| | | | | ZA | 200003265 | B | 02 January 2002 |
| | | | | BE | 1013409 | A3 | 04 December 2001 |
| | | | | SE | 0002508 | D0 | 03 July 2000 |
| | | | | SE | 0002508 | L | 06 January 2001 |
| | | | | SE | 522241 | C2 | 27 January 2004 |

Form PCT/ISA/210 (patent family annex) (July 2022)

**REFERENCES CITED IN THE DESCRIPTION**

**Patent documents cited in the description**

- CN 202310422565